# EUROPEAN PATENT APPLICATION

(11) **EP 1 837 749 A2**
(43) Date of publication of application: **26.09.2007**
(21) Application number: 06011930.2
(22) Date of filing: 09.06.2006
(51) Int. Cl.: G06F 3/06

(54) **Storage device and method of accessing storage device**

(30) Priority: 21.03.2006 US 277138
(71) Applicant: MediaTek, Inc, Hsin-Chu Hsien Taiwan (CN)
(72) Inventor: Chung, Tsung-Ning, Sinyi District Taipei City Taiwan (CN); Chen, Jaan-Huei, San-Chung City Taipei Hsien Taiwan (CN)
(74) Representative: Schaeberle, Steffen

(57) **Abstract**

The present embodiments provide a storage device (600) and a method of accessing the storage device (600). The storage device (600) is utilized for storing a plurality of first data and a plurality of second data. Each first data correlates respectively to a second data. The storage device (600) includes a first storage segment (610) and a second storage segment (620). The first storage segment (610) is divided into a plurality of first storage units (612) for storing the first data. The second storage segment (620) is divided into a plurality of second storage units (622) for storing the second data. The size of each first storage unit (612) is larger than the size of each second storage unit (622), and the size of each first data is larger than the size of its correlating second data.

## Description

The present invention relates to a method and related device for accessing a plurality of first data and a plurality of second data according to the pre-characterizing clauses of claims 1 and 11.

Two kinds of data are often stored on a storage device, for example, a hard disk drive. The first kind of data is audio/video (A/V). Typically, the size of A/V data is hundreds of megabytes. The read or write process of the A/V data is an asynchronous streaming operation, and real-time I/O is usually required. Moreover, the A/V data are accessed during playback and recording processes. The second kind of data is information. The information data contain structural information for the recordings. Typically, the size is a few kilobytes. The information data are accessed before or after the playback and recording processes.

A cluster having a large size is more suitable for storing the A/V data than a cluster having a small size. The A/V data will be disadvantageously divided into more pieces when stored in small clusters than when stored in large clusters. Large clusters are recommended to maintain high I/O performance when accessing A/V data.

If a storage device, such as a hard disk drive, is not well organized several problems will result. First, an ideal system boot up time cannot be guaranteed because information data is mixed with A/V data. Second, the time required for gathering the information data and A/V data increases. Third, a time consuming de-fragmentation process must be performed after recording creations and deletions otherwise the data will be heavily fragmented further exacerbating the time required for gathering the information. Lastly, seek operations interleaved with continuous data transferring operations, may cause the system buffer to overflow during recording or underflow during playback of the A/V data.

This in mind, the present invention aims at providing a storage device and a method of accessing the storage device that stores data according to size.

This is achieved by a storage device and a method of accessing the storage device according to claims 1 and 11. The dependent claims pertain to corresponding further developments and improvements.

As will be seen more clearly from the detailed description following below, the claimed storage device and a method of accessing the storage device includes a storage system that has two segments and is coupled to a memory device.

For completeness, various aspects of the invention are described in the following numbered clauses:
1. A storage device for storing a plurality of first data and a plurality of second data, each first data correlating to a second data respectively, the storage device comprising:
   a first storage segment, divided into a plurality of first storage units, for storing the first data; and
   a second storage segment, divided into a plurality of second storage units, for storing the second data;
   wherein the size of each first storage unit is large than the size of each second storage unit, and the size of each first data is different from the size of its correlating second data.
2. The storage device of clause 1, wherein the second storage segment further stores a file map, which correlates the first data with the second data.
3. The storage device of clause 2, wherein the first data are multimedia data and the second data are information data correlated with the multimedia data.
4. The storage device of clause 3, wherein the multimedia data comprises at least one of audio data, video data, and digital data.
5. The storage device of clause 3, wherein each multimedia data comprises at least a multimedia file segment, and the file map further comprises an accessing order of the multimedia file segments for accessing the multimedia data.
6. The storage device of clause 1, wherein the storage device is a magnetic storage device and the file system of the first storage segment is different from the file system of the second storage segment.
7. The storage device of clause 1, wherein the storage device is a magnetic storage device, and the file system of the first storage segment is the same as the file system of the second storage segment.
8. The storage device of clause 1, wherein the storage device is a hard disk, the first storage segment being a first partition, the second storage segment being a second partition, and the first and the second storage units are clusters of the first partition and the second partition respectively.
9. The storage device of clause 1, wherein the storage device is a non-volatile memory.
10. The storage device of clause 1, further comprising a second storage device stored a file map, which correlates the first data with the second data.
11. A method for accessing a plurality of first data and a plurality of second data in a storage device, the storage device comprising at least two segments: a first storage segment and a second storage segment, wherein the first storage segment is divided into a plurality of first storage units and the second storage segment is divided into a plurality of second storage units, and each first data correlates respectively to a second data, the method comprising:
   storing the first data in the first storage segment; and
   storing the second data in the second storage segment;
   wherein the size of each first storage unit is larger than the size of each second storage unit, and the size of each first data is different from the size of its correlating second data.
12. The method of clause 1 1 further comprising storing a file map in the second storage segment, wherein the file map correlates the first data with the second data.
13. The method of clause 12, wherein the first data are multimedia data and the second data are information data correlated with the multimedia data.
14. The method of clause 13, wherein the multimedia data comprises at least one of audio data, video data, and digital data.
15. The method of clause 13, wherein each multimedia data comprises at least a multimedia file segment, and the file map further comprises an accessing order of the multimedia file segments for accessing the multimedia data.
16. The method of clause 11, further comprising:
   reserving a part of the storage device as the first storage segment according to a size information;
   dividing the first storage segment into a plurality of first storage units;
   reserving a second part of the storage device as the second storage segment; and
   dividing the second storage segment into a plurality of second storage units.
17. The method of clause 16, wherein the size information is decided by the content of the second data.
18. The method of clause 11, wherein the storage device is a magnetic storage, and the file system of the first storage segment is different from the file system of the second storage segment.
19. The method of clause 11, wherein the storage device is a magnetic storage device, and the file system of the first magnetic storage device is the same as the file system of the second storage segment.
20. The method of clause 11, wherein the storage device is a hard disk, the first storage segment being a first partition, the second storage segment being a second partition, and the first and the second storage units are clusters of the first partition and the second partition respectively.
21. The method of clause 1, wherein the storage device is a non-volatile memory.
22. The method of clause 11, further storing a file map in a second storage device, which correlates the first data with the second data.

In the following, the invention is further illustrated by way of example, taking reference to the accompanying drawings. Thereof
- Fig. 1: shows a data storage system coupled to a memory device,
- Fig. 2: shows a linear hard disk space of a hard disk drive,
- Fig. 3: shows the linear hard disk space of Fig. 2 after the hard disk drive has been through several A/V file operations,
- Fig. 4: shows a linear hard disk space comprising two partitions,
- Fig. 5: shows two information data with the same size stored in the two partitions of Fig. 4 respectively,
- Fig. 6: shows a linear hard disk space comprising two partitions,
- Fig. 7: illustrates a flow chart of a reading process of the storage device,
- Fig. 8: illustrates a flow chart of a recording process of the storage device, and
- Fig. 9: shows a flow chart illustrating the process of initializing a storage device.

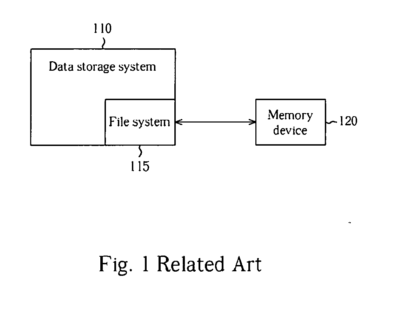

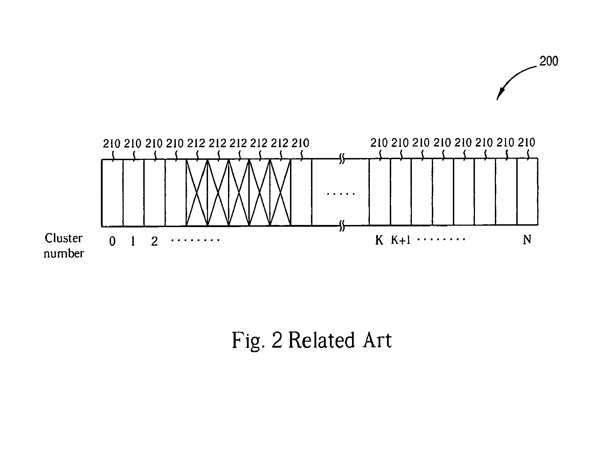

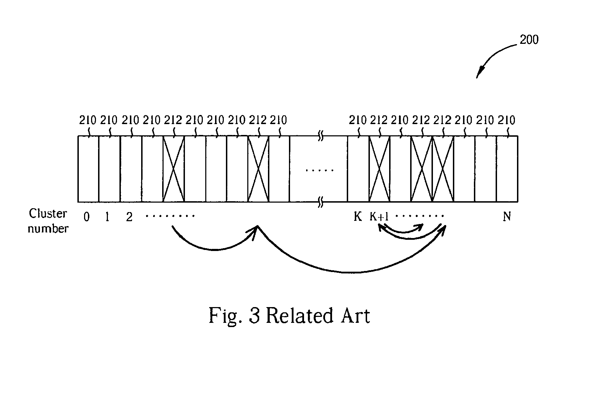

Fig. 1 shows a data storage system 110 coupled to a memory device 120. The data storage system 110 comprises a file system 115 operative to read and write data from/to the memory device 120. A hard disk drive is a common data storage system and the memory device coupled thereto is usually formatted into a plurality of clusters, which are the minimum storage units of the hard disk drive. When data having a size larger than a cluster wants to be stored in a hard disk drive formatted into a plurality of clusters, the data will be stored into more than one cluster in order to fit the size limitation of single one cluster. In this case, the A/V data are typically divided into several pieces, i.e., several A/V file segments, after being saved in a hard disk drive. Please refer to Fig. 2. Fig. 2 shows a linear hard disk space of a hard disk drive. The linear hard disk space 200 comprises a plurality of N clusters with cluster numbers 1, 2, ..., k, k + 1, ..., N. Some clusters are empty clusters 110 and others that are marked with "X" are occupied cluster 212. The A/V data are stored in the linear hard disk space 200 and are therefore divided into several A/V file segments to fit the cluster size. The occupied clusters 212 are those clusters occupied by the A/V file segments. Ideally, the A/V file segments are preferably to be arranged in a continuous series. In some cases, when a hard disk drive is newly formatted, the A/V data will be stored in the hard disk drive in a continuous series. As a result, no extra seeking operations will be required while the A/V data are being accessed. Unfortunately, after the hard disk drive has been accessed through some A/V file accessing operations such as truncation, deletion, partly erasing, the occupied clusters 212 will be dispersed randomly, as shown in Fig. 3. In this case, extra seeking operations are required while the A/V data are being accessed. The arrows represent an exemplary example to illustrate the seeking operations. More seeking operations are required, when the occupied clusters 212 are more randomly distributed after the frequently file accessing operations. As a result, accessing the A/V data takes more effort and results to spend more I/O accessing time. Issues of degraded I/O performance and less concurrent playback / recording streams available in system are thereby also introduced.

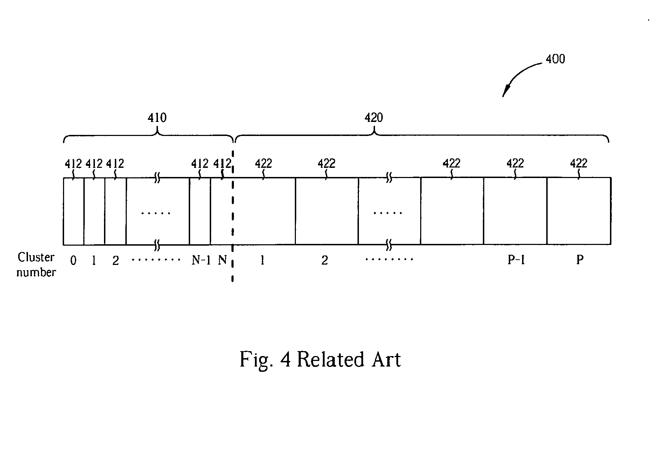

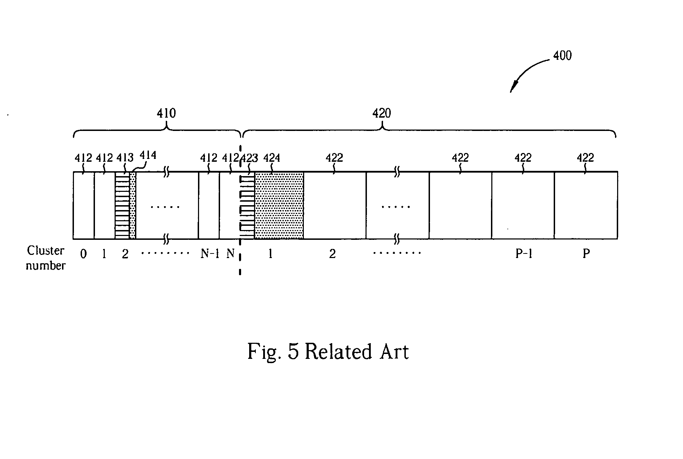

A hard disk drive can be divided into two or more than two storage segments (i.e. partitions), which have different cluster sizes. Please refer to Fig. 4. Fig. 4 shows a linear hard disk space 400 comprising two partitions 410 and 420. These two partitions 410 and 420 have clusters 412 and 422 respectively. The two partitions 410 and 420 are two independent storing areas, having N clusters and P clusters respectively. The size of the cluster 412 is smaller than the size of the cluster 422. Since the size of information data is usually small, a cluster with small size is more suitable for storing the information data than a cluster with large size. Please refer to Fig. 5 for a detailed explanation. In Fig. 5, two information data with the same size are stored in the partition 410 and the partition 420 respectively, and therefore utilize a cluster 41 2 and a cluster 422. The horizontal-lined areas 413 and 423 are actual spaces the information data occupy. The remaining parts of the utilized clusters 412 and 422 are dotted areas 414 and 424 respectively, which are empty. The dotted areas 414 and 424 are actually occupied by nothing but cannot be utilized to store data, as a cluster is the minimum unit of a partition. Consequently, the dotted areas 414 and 424 are wasted spaces. When comparing the utilized cluster 412 with the utilized cluster 422, the dotted area 424 is larger than the dotted area 414, meaning that the utilized cluster 422 has a larger wasted space than the utilized cluster 412. In short, to avoid wasted spaces, a cluster having a small size is more suitable for storing the information data than a cluster having a large size.

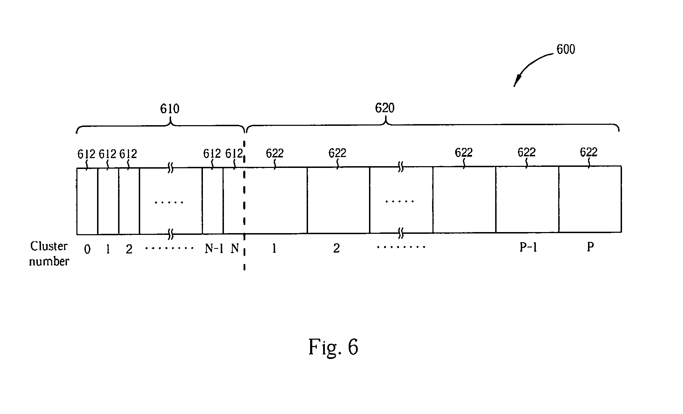

The method disclosed in the present embodiment teaches a feasible arrangement of a storage device for improving the performance of the storage device. The method can be utilized with a hard disk drive or a non-volatile memory such as a flash memory. A hard disk drive is taken as an example for illustrating the method. Please refer to Fig. 6. Fig. 6 shows a linear hard disk space 600 comprising two partitions 610 and 620. The file system of the partition 610 might be different from, or the same as the file system of the partition 620. The two partitions 610 and 620 are two independent storage areas, and the size of the cluster 612 is smaller than the size of the cluster 622. The partition 610 having a small size cluster 612 is utilized for storing the small size data, e.g. the information data. The partition 620 having a large size cluster 622 is utilized for storing the large size data, e.g. the multimedia data. The multimedia data includes audio data, video data, audio/video (A/V) data, and digital data. Each information data correlates to multimedia data; therefore, a file map, which correlates the information data with the multimedia data, is also stored in the partition 610. The file map is usually small. By arranging the storage device and data in this way, the process of accessing data in the storage device obtains some advantages. At first, the small size information data are restricted to be stored in the partition 610 having a small size cluster 612, waste of hard disk space can be avoided. Secondly, the multimedia data can avoid being seriously fragmented because the large size multimedia data are restricted to being stored in the partition 620 having a large size cluster 622. Therefore, a reduction of the number of seeking operations can be expected. Under the condition that the hard disk performance is the same, reducing seeking processes during playback or recording stream implies that the system, which controls the hard disk drive, is capable of dealing with more concurrent playback or recording streams. Thirdly, due to less seeking processes resulting from less fragmented multimedia data, the system buffer will not encounter over-consuming during the playback process or over-producing during the recording process. During the playback or recording process when data are required to be temporarily stored in the buffer or flushed from the buffer, more data can be stored or flushed because the multimedia data are stored in large clusters. Fourthly, the time consumption due to content checking or recovering will be reduced because fewer clusters are used when the multimedia data are stored in a partition with larger clusters. Fifthly, because the smaller clusters that are utilized to store the information data form a relatively small partition, the time required to gather all the information data is limited and a controllable system boot up time is guaranteed.

The multimedia data includes at least a multimedia file segment. During the process of reading the multimedia data, a sequence or an accessing order must be followed to complete the reading process. The above-mentioned file map also includes the information regarding the sequence or the accessing order. When the multimedia data is being accessed, i.e. when the multimedia data is being read or recorded, the next multimedia file segment to be accessed is determined by directly referring to the file map. As the multimedia data is less fragmented when being stored in the partition 620 having a large cluster 622, the file map becomes smaller. As a result, the file map is easy to be cached in a memory such as a DRAM or an SRAM during the accessing process, and therefore no synchronous data storage system access operations are required during the playback or recording process.

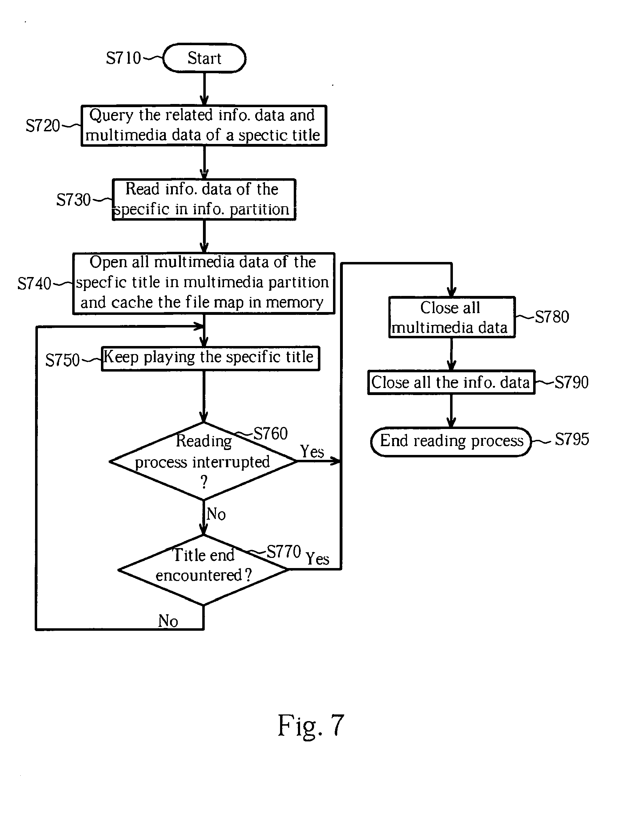

Please refer to Fig. 7. Fig. 7 illustrates a flow chart of a reading process of the storage device. After the reading process starts (S710), the system queries the information data and the multimedia data related to a specific title (S720). The system reads the information data of the specific title in the partition, in which the information data are stored (S730). Then, the system opens all multimedia data of the specific title in the partition, in which the multimedia data are stored, and also caches the file map in a memory (S740). The system keeps playing the specific title (S750) until a reading process is interrupted (S760) or the end of the specific title is encountered (S770). When either the reading process is interrupted or the end of the specific title is encountered, the system closes all the multimedia data (S780) and the information data (S790) and then ends the reading process (S795).

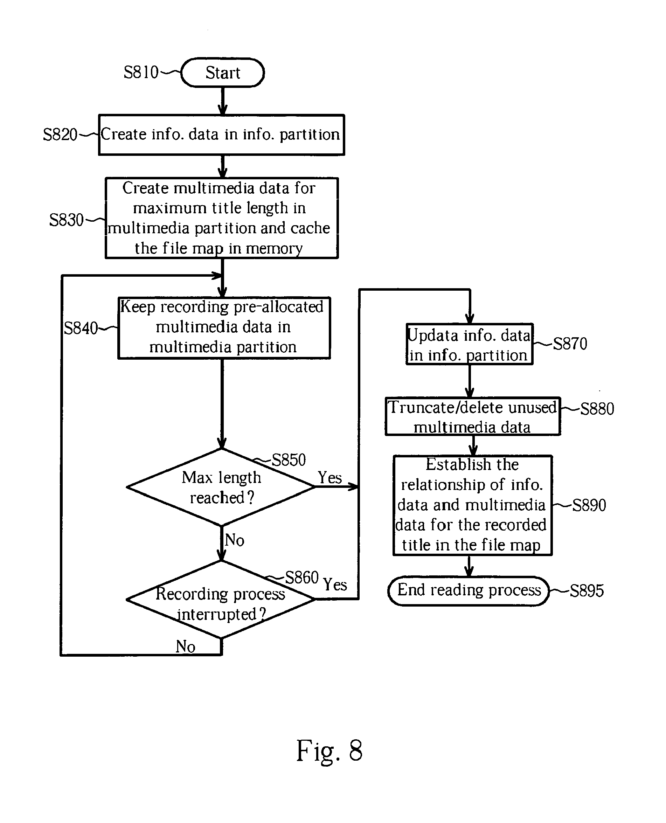

Please refer to Fig. 8. Fig. 8 illustrates a flow chart of a recording process of the storage device. After the recording process starts (S810), the system creates the information data in the partition 510 (S820). Then, the system creates multimedia data for maximum title length in the partition 520 and caches the file map in a memory (S830). The system keeps recording pre-allocated multimedia data in the partition 520 (S840) until the maximum length is reached (S850) or the recording process is interrupted (S850). When either the maximum length is reached or the recording process is interrupted, the system updates the information data in the partition 510 (S870), and truncates or deletes unused multimedia data (S880). The system establishes the relationship between the information data and the multimedia data for the recorded title in the file map (S890), and then ends the recording process (S895).

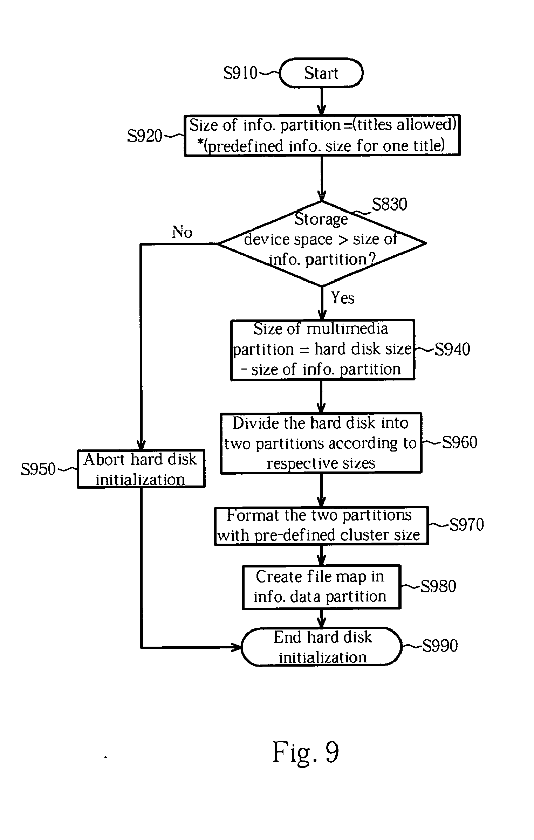

Please refer to Fig. 9. Fig. 9 shows a flow chart illustrating the process of initializing a storage device. As soon as the initialization starts (S91 0), the total size of the partition 510 is initially determined (S920). The total size of the partition 510 is equal to the number of allowed titles multiplied by the predefined information size for one title. If the counted size of the partition 510 turns out to be larger than the size of the hard disk space 500 (S930), the initialization process is aborted (S950) and then ended (S990). If, however, the counted size of the partition 510 is not larger than the size of the hard disk space 500, the size of the partition 520 is then determined (S940). The size of the partition 520 is equal to the size of the hard disk space 500 minus the size of the partition 510. The storage device is then divided into two partitions according to respective sizes (S960). The two partitions are formatted according to respective pre-defined cluster sizes (S970). Finally, the file map is created in the information data partition, i.e. the partition 510 (S980), and the initialization process ends (S990).

In summary, according to the embodiments a method is disclosed for accessing a storage device. The storage device is divided into two segments and each segment is further divided into a plurality of storage units. The size of the storage unit of one segment is different from the size of the storage unit of the other segment. The information data and the multimedia data are now separately stored into different segments. The information data, which are usually small, are stored into the segment whose storage unit size is smaller; the multimedia data, which are usually large, are stored into the segment whose storage unit size is larger. As a result, disk seeking operations can be reduced during recording or playback processes. Storage space is less wasted and de-fragmentation operations can be omitted even after many reading or writing operations. Moreover, a file map, which correlates the information data with the multimedia data, and indicates an accessing order of the multimedia file segments, is stored together with the information data. Since the file map is so small in size that it can be easily cached, synchronous data storage system read or write operations are no longer necessary during playback or recording processes.

## Claims

1. A storage device (600) for storing a plurality of first data and a plurality of second data, each first data correlating to a second data respectively, the storage device **characterized by**:
a first storage segment (610), divided into a plurality of first storage units (612), for storing the first data; and
a second storage segment (620), divided into a plurality of second storage units (622), for storing the second data;
wherein the size of each first storage unit (612) is larger than the size of each second storage unit (622), and the size of each first data is different from the size of its correlating second data.

2. The storage device (600) of claim 1, **characterized in that** the second storage segment (620) further stores a file map, which correlates the first data with the second data.

3. The storage device (600) of claim 2, **characterized in that** the first data are multimedia data and the second data are information data correlated with the multimedia data.

4. The storage device (600) of claim 3, **characterized in that** the multimedia data comprises at least one of audio data, video data, and digital data.

5. The storage device (600) of claim 3, **characterized in that** each multimedia data comprises at least a multimedia file segment, and the file map further comprises an accessing order of the multimedia file segments for accessing the multimedia data.

6. The storage device (600) of claim 1, **characterized in that** the storage device (600) is a magnetic storage device and the file system of the first storage segment (610) is different from the file system of the second storage segment (620).

7. The storage device (600) of claim 1, **characterized in that** the storage device (600) is a magnetic storage device, and the file system of the first storage segment (610) is the same as the file system of the second storage segment (620).

8. The storage device (600) of claim 1, **characterized in that** the storage device (600) is a hard disk, the first storage segment (610) being a first partition, the second storage segment (620) being a second partition, and the first and the second storage units (612, 622) are clusters of the first partition and the second partition respectively.

9. The storage device (600) of claim 1, **characterized in that** the storage device (600) is a non-volatile memory.

10. The storage device (600) of claim 1, **characterized by** a second storage device stored a file map, which correlates the first data with the second data.

11. A method for accessing a plurality of first data and a plurality of second data in a storage device (600), the storage device (600) comprising at least two segments: a first storage segment (610) and a second storage segment (620), wherein the first storage segment (610) is divided into a plurality of first storage units (612) and the second storage segment (620) is divided into a plurality of second storage units (622), and each first data correlates respectively to a second data, the method **characterized by**:
storing the first data in the first storage segment (610); and
storing the second data in the second storage segment (620);
wherein the size of each first storage unit (612) is larger than the size of each second storage unit (622), and the size of each first data is different from the size of its correlating second data.

12. The method of claim 11, **characterized by** storing a file map in the second storage segment (620), wherein the file map correlates the first data with the second data.

13. The method of claim 12, **characterized in that** the first data are multimedia data and the second data are information data correlated with the multimedia data.

14. The method of claim 13, **characterized in that** the multimedia data comprises at least one of audio data, video data, and digital data.

15. The method of claim 13, **characterized in that** each multimedia data comprises at least a multimedia file segment, and the file map further comprises an accessing order of the multimedia file segments for accessing the multimedia data.

16. The method of claim 11, **characterized by**:
reserving a part of the storage device (600) as the first storage segment (610) according to a size information;
dividing the first storage segment (610) into a plurality of first storage units (612);
reserving a second part of the storage device (600) as the second storage segment (620); and
dividing the second storage segment into a plurality of second storage units (622).

17. The method of claim 16, **characterized in that** the size information is decided by the content of the second data.

18. The method of claim 11, **characterized in that** the storage device (600) is a magnetic storage, and the file system of the first storage segment (610) is different from the file system of the second storage segment (620).

19. The method of claim 11, **characterized in that** the storage device (600) is a magnetic storage device, and the file system of the first magnetic storage device is the same as the file system of the second storage segment (620).

20. The method of claim 11, **characterized in that** the storage device (600) is a hard disk, the first storage segment (610) being a first partition, the second storage segment (620) being a second partition, and the first and the second storage units (612, 622) are clusters of the first partition and the second partition respectively.

21. The method of claim 1, **characterized in that** the storage device (600) is a non-volatile memory.

22. The method of claim 11, **characterized by** storing a file map in a second storage device, which correlates the first data with the second data.
